# EUROPÄISCHE PATENTSCHRIFT

(11) **EP 1 817 210 B1**
(45) Veröffentlichungstag und Bekanntmachung des Hinweises auf die Patenterteilung: **19.11.2008**
(21) Anmeldenummer: 05848541.8
(22) Anmeldetag: 01.12.2005
(51) Int. Cl.: B60R 21/16

(54) **SEITEN-AIRBAGEINRICHTUNG**
LATERAL AIRBAG DEVICE
DISPOSITIF AIRBAG LATERAL

(30) Priorität: 03.12.2004 DE 102004058564
(43) Veröffentlichungstag der Anmeldung: 15.08.2007
(73) Patentinhaber: Takata-Petri AG, 63743 Aschaffenburg (DE)
(72) Erfinder: BREUNINGER, Martin, 89233 Neu-ulm (DE)
(74) Vertreter: Baumgärtel, Gunnar
(86) Internationale Anmeldenummer: PCT/DE2005/002194
(87) Internationale Veröffentlichungsnummer: WO 2006/058534

(56) Entgegenhaltungen:
- DE-A1- 19 930 157
- US-A1- 2003 178 831
- US-A1- 2004 119 270

## Beschreibung

Die Erfindung bezieht sich auf eine Seiten-Airbageinrichtung für ein Fahrzeug mit einem Kopfairbag, der im Falle eines Fahrzeugunfalls einen seitlichen Aufprallschutz für den Kopf eines Fahrzeuginsassen bewirkt.

Eine derartige Seiten-Airbageinrichtung ist aus der deutschen Offenlegungsschrift DE 199 30 157 A1 bekannt. Diese Seiten-Airbageinrichtung weist zwei Gassackkammern auf, die im Falle eines Fahrzeugunfalls den Fahrzeuginsassen schützen. Eine dieser Gassackkammern ist durch eine "Kopfkammer" gebildet, die speziell zum Schutz des Kopfes des Fahrzeuginsassen dient. Die zweite Kammer - "Thoraxkammer" - dient zum Schutz des Oberkörpers des Fahrzeuginsassen, wenn dieser unfallbedingt in die Thoraxkammer eintaucht.

Eine Seiten-Airbageinrichtung mit den Merkmalen gemäß dem Oberbegriff des Anspruchs 1 ist aus der US-Patentanmeldung US 2003/0178831 bekannt.

Der Erfindung liegt die Aufgabe zugrunde, eine Seiten-Airbageinrichtung der vorbekannten Art dahingehend zu verbessern, dass ein noch besserer Schutz des Fahrzeuginsassen als bisher erreicht wird. Insbesondere soll sichergestellt werden, dass der Kopf eines Fahrzeuginsassen in allen Phasen eines Fahrzeugunfalls ausreichend geschützt wird.

Diese Aufgabe wird ausgehend von einer Seiten-Airbageinrichtung der eingangs angegebenen Art erfindungsgemäß durch die kennzeichnenden Merkmale des Anspruchs 1 gelöst. Vorteilhafte Ausgestaltungen der erfindungsgemäßen Seiten-Airbageinrichtung sind in Unteransprüchen angegeben.

Danach ist erfindungsgemäß vorgesehen, dass der Kopfairbag zum Schutz des Kopfes des Fahrzeuginsassen zumindest zwei Kopfkammern aufweist, wobei eine der beiden Kopfkammern, die nachfolgend erste Kopfkammer genannt wird, im Unfallfall die unfallbedingte Bewegung des Kopfes abbremst. Eine weitere Kopfkammer, die nachfolgend zweite Kopfkammer genannt wird, stützt die erste Kopfkammer ab. Diese zweite Kopfkammer ist weniger gasdurchlässig als die erste Kopfkammer ausgeführt. Erfindungsgemäß ist die zweite Kopfkammer für Gas undurchlässig, und die beiden Kopfkammern werden im Falle eines Unfalls separat voneinander mit Gas gefüllt und sind gasstrommäßig getrennt.

Ein wesentlicher Vorteil der erfindungsgemäßen Seiten-Airbageinrichtung ist darin zu sehen, dass durch den Zwei-Kammer-Aufbau des Kopfairbags ein besonders umfassender Schutz des Fahrzeuginsassen erreicht wird. Dadurch, dass die erste Kopfkammer gasdurchlässiger als die zweite Kopfkammer ausgeführt ist, lässt sich der Fahrzeuginsasse wirkungsvoll in allen Phasen eines Unfalls schützen, nämlich sowohl in einer ersten Phase eines Fahrzeugunfalls als auch in der sich daran anschließenden zweiten Unfallphase: Der Schutz in der ersten Unfallphase ("First-Impact-Phase") wird durch die erste Kopfkammer bereitgestellt, die den Kopf des Fahrzeuginsassen nach Unfalleintritt abbremst. Diese erste Kopfkammer ist gasdurchlässig ausgeführt, so dass bei einem Eintauchen des Kopfes in den Kopfairbag während der ersten Unfallphase ein Gasaustritt aus der ersten Kopfkammer ermöglicht wird; der Kopf wird somit sehr wirkungsvoll abgebremst und es wird "Bewegungsenergie" abgebaut. Im Verlauf der sich daran anschließenden zweiten Unfallphase, in der es beispielsweise zu einem Fahrzeugüberschlag ("Roll-Over-Phase") kommen kann, schützt die zweite Kopfkammer den Fahrzeuginsassen; denn die zweite Kopfkammer bleibt im Unterschied zur ersten "gasdurchlässigeren" Kopfkammer auch in der zweiten Unfallphase noch mit Gas gefüllt und schützt den Fahrzeuginsassen durch einen seitlichen Kissenschutz. Zusammengefasst wird durch den Zweikammeraufbau sowie durch die Kombination zweier unterschiedlich gasdurchlässiger Kopfkammern erreicht, dass in allen Phasen eines Fahrzeugunfalls der Kopf des Fahrzeuginsassen optimal geschützt wird.

Die erste Kopfkammer kann beispielsweise im Unfallfall dem Kopf unmittelbar zugewandt derart entfaltet werden, dass der Kopf im Unfallfall unmittelbar in die erste Kopfkammer eintaucht. Die zweite Kopfkammer wird in diesem Falle dem Kopf abgewandt entfaltet. Bevorzugt wird die zweite Kopfkammer - in Aufschlagrichtung des Kopfes gesehen - hinter der ersten Kopfkammer derart angeordnet, dass sie in einer der ersten Unfallphase nachfolgenden zweiten Unfallphase eine seitliche Abschirmung des Kopfes gewährleistet, insbesondere für den Fall von Fahrzeugüberschlägen. Die Seiten-Airbageinrichtung bildet damit einen idealen Schutz für "First-Impact"- sowie "Roll-Over"-Unfälle.

Alternativ kann die erste Kopfkammer im Unfallfall dem Kopf abgewandt entfaltet werden; die zweite Kopfkammer wird in diesem Falle dem Kopf zugewandt derart entfaltet, dass der Kopf im Unfallfall unmittelbar in die zweite Kopfkammer eintaucht. Die Abbremswirkung der ersten Kopfkammer wird bei dieser Ausgestaltung der Seiten-Airbageinrichtung durch "Vermittlung" der zweiten Kopfkammer bewirkt. Beispielsweise ist die zweite Kopfkammer - in Aufschlagrichtung des Kopfes gesehen - vor der ersten Kopfkammer derart angeordnet, dass sie in einer der ersten Unfallphase nachfolgenden zweiten Unfallphase eine seitliche Abschirmung des Kopfes gewährleistet, insbesondere für den Fall von Fahrzeugüberschlägen.

Im Hinblick auf eine Aufteilung des Gasstromes in die beiden Kopfkammern des Kopfairbags sind die Gasauslassöffnungen der Gaslanze vorzugsweise jeweils ausschließlich der ersten oder der zweiten Kopfkammer zugeordnet.

Bevorzugt ist die Gaslanze mit zumindest einem Ventil ausgestattet, mit dem sich der Gasstrom zwischen der Gaslanze und der ersten Kopfkammer und umgekehrt unterbrechen lässt. Ein solches Ventil bietet die Möglichkeit, den Gasstrom in die erste Kopfkammer zu unterbrechen, sobald die erste Unfallphase abgeschlossen ist und die erste Kopfkammer keine weitere Funktion übernehmen muss. Durch ein Trennen des Gasstroms zwischen der Gaslanze und der ersten Kopfkammer lässt sich erreichen, dass ein unerwünschter Gasverlust nach Abschluss der ersten Unfallphase durch die gasdurchlässige erste Kopfkammer hindurch vermieden wird.

Beispielsweise kann das Ventil geschlossen werden, wenn in der ersten Kopfkammer ein vorgegebener Gasdruck erreicht ist oder wenn der Gasdruck in der Gaslanze einen vorgegebenen Mindestdruck unterschreitet. Das Ventil kann beispielsweise - ähnlich zu herkömmlichen Fahrradventilen - durch ein Rohr mit Löchern in der Rohrwand gebildet sein, die von einem Dichtelement - beispielsweise einer elastischen Manschette, beispielsweise einer Gummimanschette, oder einem Schlauch oder dergleichen - abgedeckt werden. Überschreitet der Druck im Rohrinneren (Anschlussseite für Gasgenerator) den Umgebungsdruck außerhalb des Rohres (Anschlussseite erste Kopfkammer), so wird das Gas entgegen der Rückhaltekraft der Manschette bzw. des Schlauchs diese(n) dehnen und einen Gasaustritt durch die wandseitigen Löcher ermöglichen; ist der Druck des Gasgenerators jedoch zu klein oder der Gegendruck der ersten Kopfkammer zu groß, so bleibt die Manschette bzw. der Schlauch geschlossen und das Ventil ist "bidirektional" verschlossen. Ein solches Ventil ermöglicht einen Gasstrom lediglich in einer Stromrichtung, nämlich vom Gasgenerator zu der ersten Kopfkammer, und dies auch nur dann, wenn die beschriebenen Druckverhältnisse vorliegen.

Das Ventil zum Unterbrechen des Gasstroms zwischen der Gaslanze und der ersten Kopfkammer kann alternativ ein elektrisch oder pneumatisch gesteuertes Ventil sein. Zur Ansteuerung des Ventils wird vorzugsweise eine Steuereinrichtung verwendet, die mit einem Drucksensor in Verbindung steht, der in der Gaslanze und/oder in oder an der Kopfkammer angebracht ist und den Gasdruck in der Gaslanze bzw. in der ersten Kopfkammer misst. Unter Berücksichtigung der jeweiligen Druckwerte des Drucksensors, mit denen sich u. a. der Abschluss der ersten Unfallphase erkennen lässt, wird das Ventil durch die Steuereinrichtung geschlossen, sobald die erste Unfallphase abgeschlossen ist. Alternativ kann das Ventil auch zeitgesteuert geschlossen werden, beispielsweise nach Ablauf einer vorgegebenen Zeitspanne nach Unfalleintritt (Beginn der "zweiten Unfallphase").

Der Kopfairbag kann beispielsweise durch drei Materiallagen gebildet sein, die vorzugsweise miteinander vernäht oder verklebt sind. Beispielsweise sind eine erste Materiallage und eine zweite Materiallage miteinander verbunden und bilden die zweite Kopfkammer. Eine dritte Materiallage wird mit der zweiten Materiallage verbunden und bildet mit dieser die erste Kopfkammer.

Im Hinblick auf die Gasdurchlässigkeit der ersten Kopfkammer kann die dritte Materiallage beispielsweise gasdurchlässig sein. Alternativ kann die dritte Materiallage derart mit der zweiten Materiallage verbunden sein, dass zumindest ein Gasaustrittsloch gebildet wird, durch das Gas aus der ersten Kopfkammer nach draußen austreten kann.

Die zweite Materiallage weist vorzugsweise entlang einer mit der ersten und der dritten Materiallage verbundenen Seitenkante zumindest eine Materialaussparung auf, die einen Gasstrom von einer zwischen der ersten und der zweiten Materiallage eingeführten Gaslanze zu der ersten Kopfkammer ermöglicht. Die Materialaussparung kann beispielsweise V-förmig sein.

Die dritte Materiallage ist vorzugsweise im Wesentlichen rechteckförmig. Im Bereich zweier Ecken dieses Rechtecks sind bevorzugt Ausströmöffnungen vorgesehen, die ein Abströmen des Gases aus der ersten Kopfkammer ermöglichen. Im Hinblick auf eine Vergrößerung der Ausströmgeschwindigkeit können die zwei Ecken des Rechtecks auch abgeschrägt ausgeführt sein.

Wird die Gaslanze zwischen der ersten und der zweiten Materiallage angeordnet, so lässt sich besonders einfach und damit vorteilhaft eine gasdichte Verbindung zwischen der zweiten Kopfkammer und der Gaslanze durch Klemmverbindungen erreichen, die durch - beispielsweise mittels Nähte isolierte - Öffnungslöcher in den Materiallagen hindurchgeführt sind und die Gaslanze mit den drei Materiallagen fest verbinden.

Im Übrigen wird es als vorteilhaft angesehen, wenn die äußere Form und damit die Schutzwirkung der entfalteten ersten Kopfkammer durch zumindest ein Fangband beeinflusst wird. Das zumindest eine Fangband kann beispielsweise außen oder innen an der ersten Kopfkammer angebracht sein.

Die Erfindung wird nachfolgend anhand von Ausführungsbeispielen näher erläutert. Dabei zeigen:
- Fig. 1A: eine dreidimensionale Darstellung eines ersten Ausführungsbeispiels der Erfindung,
- Fig. 1B -1E: Verfahrensschritte zur Herstellung der Seiten-Airbageinrichtung gemäß Figur 1A,
- Fig. 1 F: den Gasfluss in der Seiten-Airbageinrichtung gemäß Figur 1A,
- Fig. 1 G: eine weitere dreidimensionale Darstellung der Seiten-Airbageinrichtung gemäß Figur 1A,
- Fig. 2: ein zweites Ausführungsbeispiel einer erfindungsgemäßen Seiten-Airbageinrichtung mit einem Ventil,
- Fig. 3A und 3B: Herstellungsschritte zur Herstellung eines dritten Ausführungsbeispiels einer erfindungsgemäßen Seiten-Airbageinrichtung,
- Fig. 4A und 4B: Herstellungsschritte zur Herstellung eines vierten Ausführungsbeispiels einer erfindungsgemäßen Seiten-Airbageinrichtung,
- Fig. 5: ein fünftes Ausführungsbeispiel einer erfindungsgemäßen Seiten-Airbageinrichtung,
- Fig. 6: ein sechstes Ausführungsbeispiel einer erfindungsgemäßen Seiten-Airbageinrichtung,
- Fig. 7A -7E: Herstellungsschritte zur Herstellung eines siebenten Ausführungsbeispiels einer erfindungsgemäßen Seiten-Airbageinrichtung und
- Fig. 8: ein Ausführungsbeispiel eines Ventils für die Ausführungsbeispiele der Erfindung gemäß den Figuren 1A bis 7C.

Im Zusammenhang mit den Figuren werden für identische oder vergleichbare Komponenten identische Bezugszeichen verwendet.

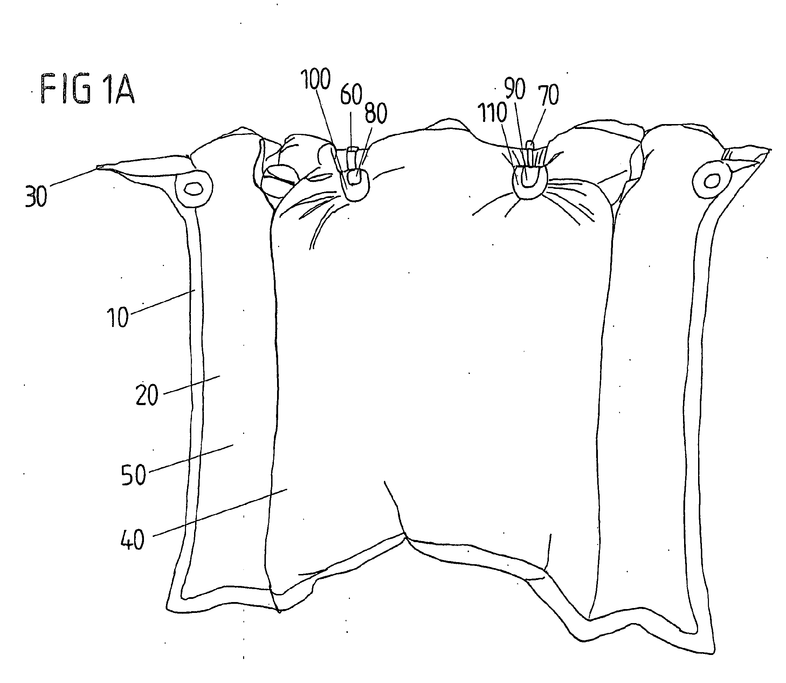

In der Figur 1A erkennt man eine Seiten-Airbageinrichtung 10 mit einem Kopfairbag 20, der durch Gas eines in der Figur 1A nicht dargestellten Gasgenerators im Falle eines Unfalls aufgeblasen ist. Das Gas gelangt von dem nicht dargestellten Gasgenerator über eine Gaslanze 30 in den Kopfairbag 20.

Der Kopfairbag 20 weist zwei Kopfkammern auf, nämlich eine erste Kopfkammer 40 sowie eine zweite Kopfkammer 50. Die erste Kopfkammer 40 ist derart angeordnet, dass sie dem Kopf eines zu schützenden Fahrzeuginsassen unmittelbar zugewandt ist, und zwar derart, dass der Kopf des Fahrzeuginsassen im Unfallfall in diese erste Kopfkammer 40 eintauchen wird. Die erste Kopfkammer 40 ist an der zweiten Kopfkammer 50 befestigt, beispielsweise angenäht; die zweite Kopfkammer 50 hält bzw. stützt die erste Kopfkammer 40 ab.

Zur Befestigung des Kopfairbags 20 an der Gaslanze 30 dienen zwei Klemmbänder 60 und 70, die durch Durchgangslöcher 80 und 90 im Kopfairbag 20 hindurchgeführt sind und den Kopfairbag 20 an der Gaslanze 30 befestigen. Um zu vermeiden, dass das Gas aus den beiden Kopfkammern 40 und 50 durch die Durchgangslöcher 80 und 90 entweichen kann, sind diese mittels kreisförmiger Nähte 100 und 110 abgedichtet bzw. isoliert.

Wie weiter unten im Zusammenhang mit der Beschreibung der Herstellung des Kopfairbags 20 deutlich werden wird, ist die erste Kopfkammer 40 gasdurchlässig und die zweite Kopfkammer 50 gasundurchlässig ausgeführt. Durch die unterschiedliche Ausgestaltung der beiden Kopfkammern 40 und 50 wird erreicht, dass verschiedene Unfallphasen im Unfallverlauf berücksichtigt werden: Konkret dient die erste Kopfkammer 40 dazu, eine erste Unfallphase ("First Impact-Phase") abzudecken, in der der Kopf des Fahrzeuginsassen in die erste Kopfkammer 40 eintaucht. Im Rahmen des Eintauchvorganges wird Gas aus der ersten Kopfkammer 40 austreten, da die Kopfkammer 40 gasdurchlässig ist, wodurch ein optimales Abbremsen des Kopfes erreicht wird. Die Schutzwirkung der ersten Kopfkammer 40 beschränkt sich aufgrund des Gasverlustes auf die erste Unfallphase des Unfalls. Für das weitere Unfallgeschehen, beispielsweise für nachfolgende Überrollvorgänge des Fahrzeugs, dient die zweite Kopfkammer 50, die gasundurchlässig ausgeführt ist und auch im weiteren Unfallgeschehen ihren Gasdruck unverändert, zumindest weitgehend unverändert, aufrecht erhalten wird. Die zweite Kopfkammer 50 ermöglicht somit auch im weiteren Unfallverlauf eine Abstützung bzw. Abschirmung des Kopfes des Fahrzeuginsassen gegenüber einem Aufschlagen an seitlichen Fahrzeugteilen, beispielsweise einer Seitenwand oder der Seitenscheibe des Fahrzeugs.

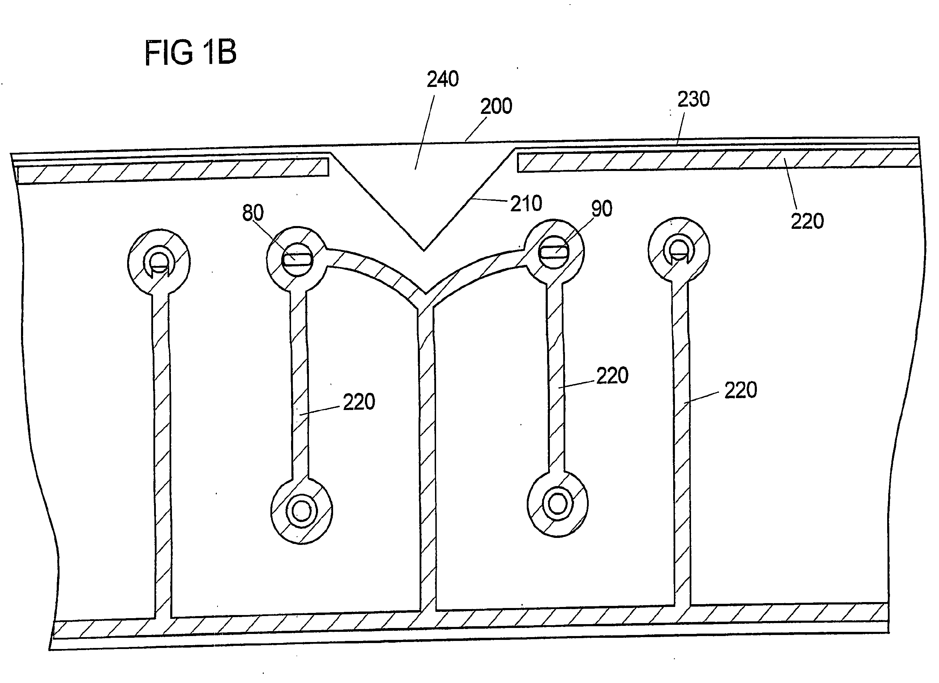

Nachfolgend wird die Herstellung der Seiten-Airbageinrichtung 10 gemäß Figur 1A anhand der Figuren 1B bis 1F erläutert. In der Figur 1B erkennt man eine erste Materiallage bzw. erste Materialplatte 200, auf die eine zweite Materiallage bzw. Materialplatte 210 aufgesetzt ist. Die beiden Materiallagen 200 und 210 werden in nachfolgenden Herstellungsschritten miteinander vernäht. Um zu vermeiden, dass an den Nahtstellen Gas austreten kann, wird im Bereich der späteren Nähte zunächst Silikon zwischen den beiden Materiallagen 200 und 210 aufgebracht. Die mit Silikon beschichteten Stellen der Materiallagen 200 und 210 sind in der Figur 1B durch Bezugszeichen 220 gekennzeichnet. In der Figur 1B sind außerdem die Durchgangslöcher 80 und 90 erkennbar, die in den beiden Materiallagen 200 und 210 vorhanden sind.

Wie sich in der Figur 1B erkennen lässt, weist die zweite Materiallage 210 entlang einer ihrer mit der ersten Materiallage 200 verbundenen Seitenkanten 230 eine Materialaussparung 240 auf, die im Wesentlichen V-förmig ausgestaltet ist. Die beiden Materiallagen 200 und 210 bilden die zweite Kopfkammer 50 des Kopfairbags 20.

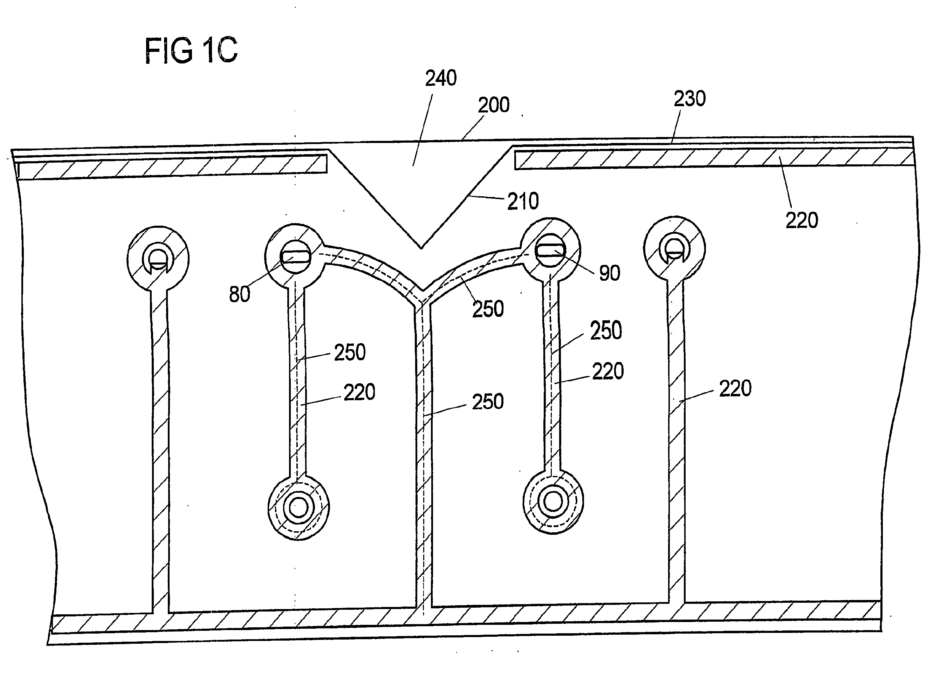

In der Figur 1C sind die beiden Materiallagen 200 und 210 dargestellt, nachdem diese durch Nähte 250 miteinander vernäht worden sind. Man erkennt, dass die Bereiche mit den Durchgangslöchern 80 und 90 noch unvemäht bleiben.

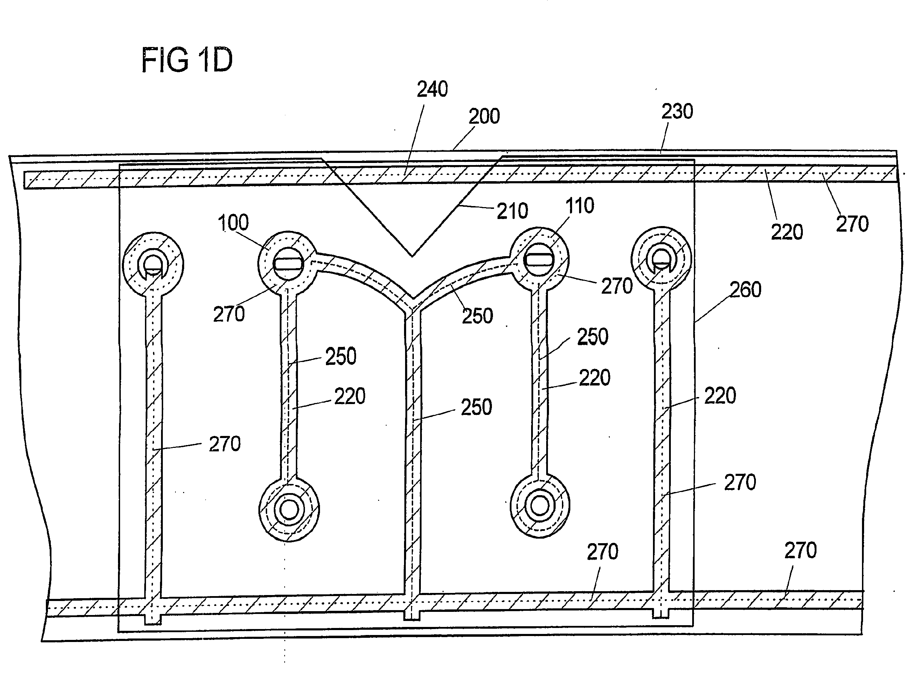

Figur 1D zeigt die beiden Materiallagen 200 und 210, nachdem eine dritte Materiallage 260 auf die zweite Materiallage 210 aufgesetzt worden ist. Die dritte Materiallage ist im Wesentlichen rechteckförmig und wird mittels Nähte 270 sowohl mit der ersten Materiallage 200 als auch mit der zweiten Materiallage 210 vernäht. Die Nähte 270 erstrecken sich dabei auch in Bereiche außerhalb der dritten Materiallage 260 und dienen somit auch zum Verbinden der ersten Materiallage 200 mit der zweiten Materiallage 210 in Bereichen außerhalb der dritten Materiallage 260. Auch die Bereiche mit den Durchgangslöchern 80 und 90 werden vernäht; es bilden sich die in der Figur 1A bereits erwähnten kreisförmigen Nähte 100 und 110.

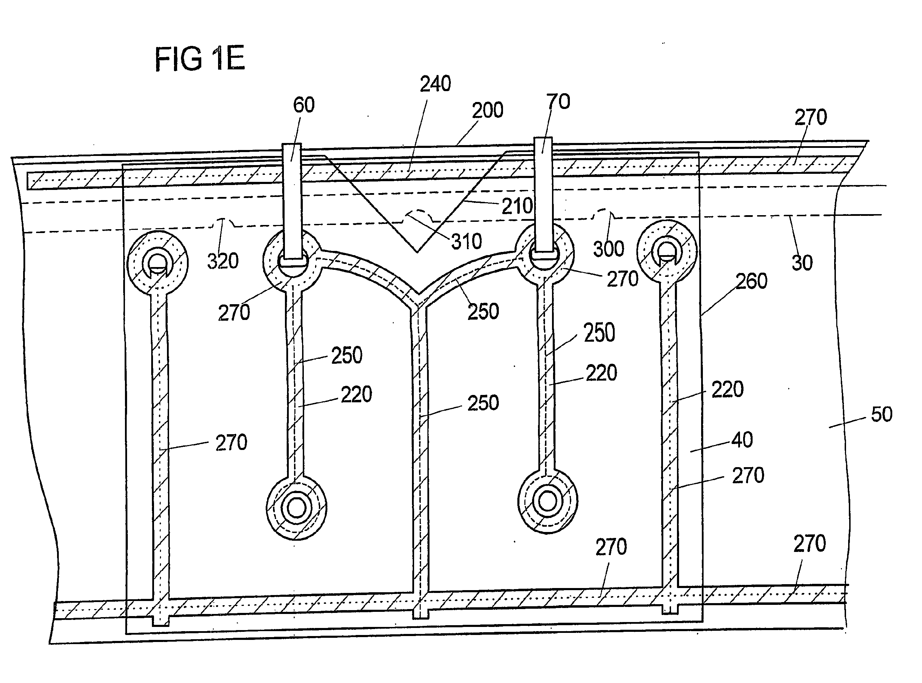

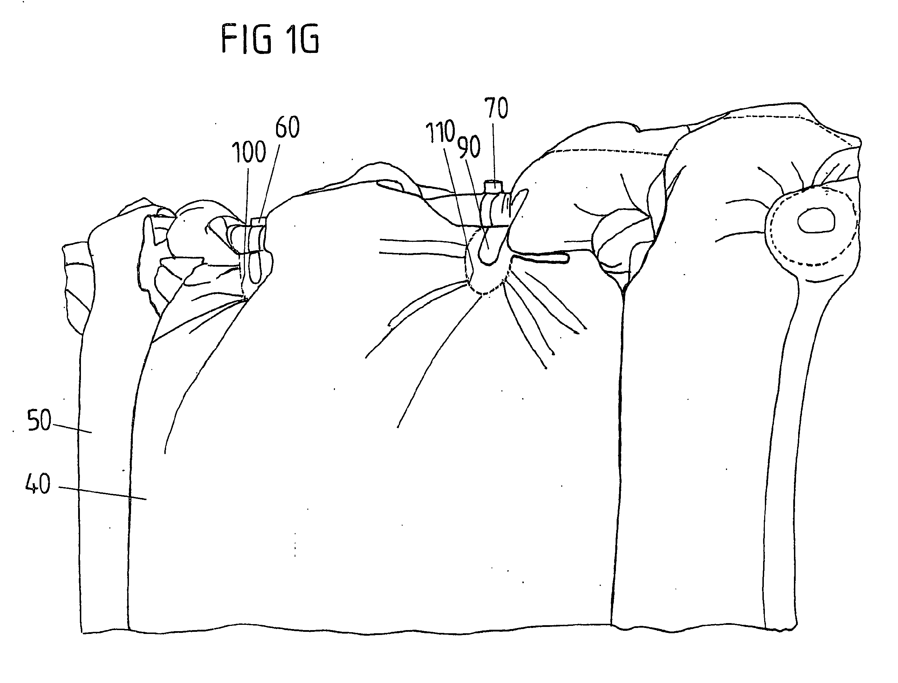

In den Figuren 1E und 1G sind die drei Materiallagen 200, 210 und 260 gezeigt, nachdem die Gaslanze 30 zwischen der ersten Materiallage 200 und der zweiten Materiallage 210 eingeführt worden ist. Zum Befestigen der drei Materiallagen 200, 210 und 260 dienen die beiden Klemmbänder 60 und 70, die gasdichte Verbindungsbereiche zwischen dem Kopfairbag 20 und der Gaslanze 30 sicherstellen.

Wie sich in der Figur 1E erkennen lässt, weist die Gaslanze 30 drei Gasauslassöffnungen 300, 310 und 320 auf. Die beiden Gasauslassöffnungen 300 und 320 dienen zum Aufblasen der durch die erste Materiallage 200 und die zweite Materiallage 210 gebildeten zweiten Kopfkammer 50 des Kopfairbags 20. Die mittlere Gasauslassöffnung 310 der Gaslanze 30 dient zum Aufblasen der ersten Kopfkammer 40, die durch die dritte Materiallage 260 sowie die zweite Materiallage 210 gebildet ist. Damit das Gas von der Gasaustrittsöffnung 310 in die erste Kopfkammer 40 gelangen kann, ist die im Zusammenhang mit der Figur 1B bereits angesprochene V-förmige Materialaussparung 240 in der zweiten Materiallage 210 vorgesehen; diese Materialaussparung 240 ermöglicht es, dass das Gas aus der zwischen der ersten Materiallage 200 und der zweiten Materiallage 210 angeordneten Gaslanze 30 in den Bereich zwischen der zweiten Materiallage 210 und der dritten Materiallage 260 gelangen kann.

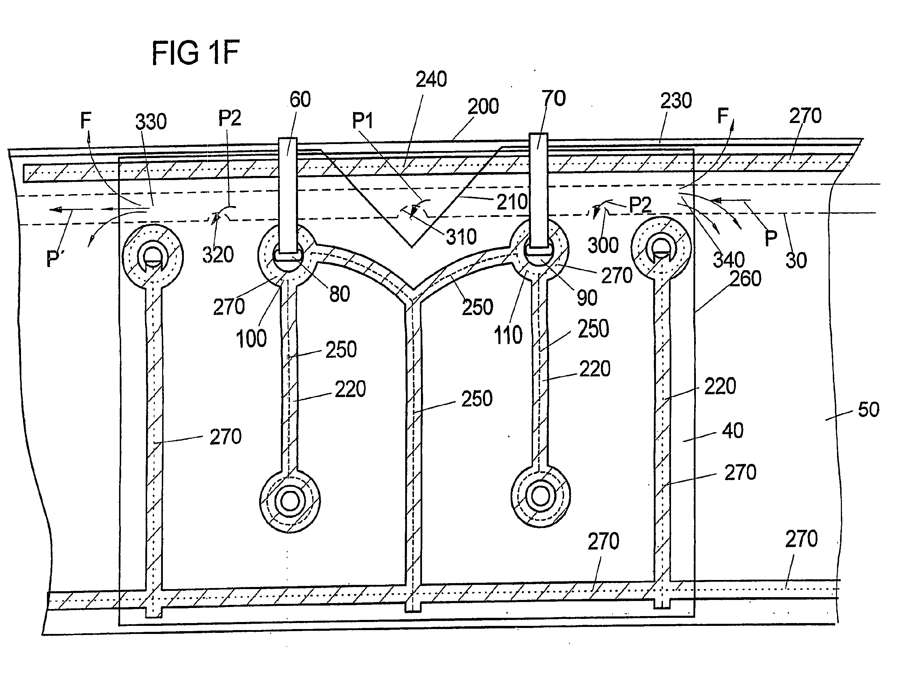

Das Befüllen der beiden Kopfkammern 40 und 50 mit Gas ist in der Figur 1F nochmals im Detail gezeigt. Die Pfeile P zeigen den Gasfluss des Gases durch die Gaslanze 30 sowie den Gasdurchtritt durch die Gasauslassöffnungen 300, 310 und 320 (P1: Gasfluss in die erste Kopfkammer, P2: Gasfluss in die zweite Kopfkammer). Darüber hinaus ist durch einen Pfeil P' in der Figur 1F angedeutet, dass der Gasstrom durch die Gaslanze 30 zu weiteren Gasauslassöffnungen (nicht weiter dargestellt) führen könnte, die zum Befüllen der zweiten Kopfkammer 50 herangezogen werden.

Wie sich in der Figur 1F außerdem erkennen lässt, sind in zwei Bereichen 330 und 340 der dritten Materiallage 260 keine Nähte 270 vorhanden, mit denen die dritte Materiallage 260 mit den beiden anderen Materiallagen 200 und 210 verbunden ist. In diesen Bereichen ist somit keine gasdichte Isolation der dritten Materiallage 260 gebildet, so dass Gas aus der durch die dritte Materiallage 260 und die zweite Materiallage 210 gebildeten ersten Kopfkammer 40 austreten kann. Dieser Gasfluss nach außen ist in der Figur 1F durch Pfeile F angedeutet. Die erste Kopfkammer 40 ist dadurch im Gegensatz zur zweiten Kopfkammer 50, die durch die isolierten Materiallagen 200, 210 gebildet ist, gasdurchlässig.

Bei dem Ausführungsbeispiel gemäß den Figuren 1A bis 1F sind keine Ventile in der Gaslanze 30 vorgesehen, so dass ein Gasaustausch zwischen der ersten Kopfkammer 40 und der zweiten Kopfkammer 50 über die Gasauslassöffnungen 300, 310 und 320 auftreten kann. Dadurch kann es dazu kommen, dass Gas aus der ansonsten gasdichten zweiten Kopfkammer 50 über die beiden Gasaustrittsöffnungen 300 und 320 sowie die mittlere Gasaustrittsöffnung 310 der Gaslanze 30 in die erste Kopfkammer 40 und von dort nach draußen austreten kann.

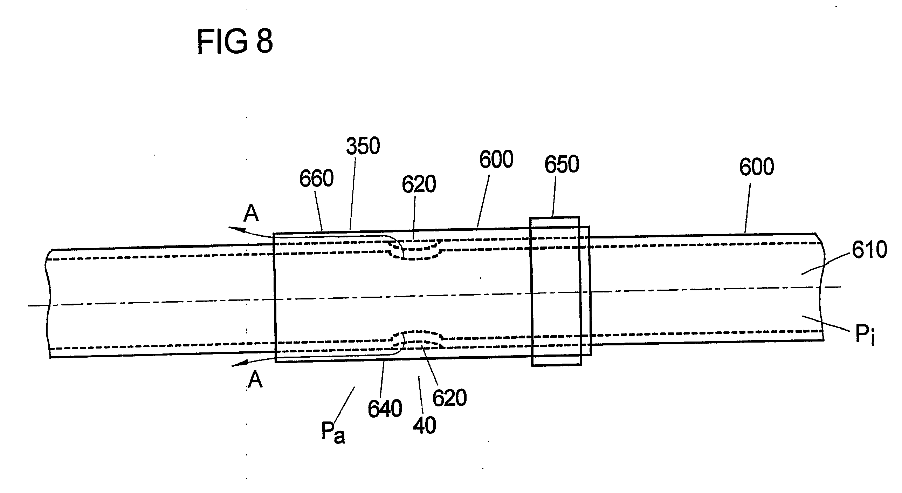

Um einen solchen Gasverlust aus der zweiten Kopfkammer 50 zu vermeiden, ist gemäß einem zweiten Ausführungsbeispiel der Erfindung in der Gaslanze 30 ein Ventil 350 vorgesehen, das einen Gasfluss von der Gaslanze 30 durch die Gasauslassöffnung 310 unterbinden kann. Das Ventil 350 ist steuerbar ausgestaltet und wirkt im Sperrzustand bidirektional und im Durchlasszustand unidirektional. Dies bedeutet, dass das Ventil 350 einen Gasfluss in Richtung zu der ersten Kopfkammer 40 als auch in umgekehrter Richtung im Sperrzustand unterbindet; im Durchlasszustand ist ein Gasfluss lediglich von der Gaslanze 30 in die erste Kopfkammer 40, nicht jedoch umgekehrt möglich. Die Ansteuerung des steuerbaren Ventils 350 erfolgt beispielsweise gasdruckabhängig: Beispielsweise kann das Ventil 350 abgeschaltet und ein Gasfluss in bzw. aus der ersten Kopfkammer 40 verhindert werden, sobald in der ersten Kopfkammer 40 ein vorgegebener Gasdruck erreicht ist oder wenn der Gasdruck in der Gaslanze 30 einen vorgegebenen Mindestdruck unterschreitet. Beide Maßnahmen stellen sicher, dass es zu keinem unerwünschten Gasaustritt von Gas aus der zweiten Kopfkammer 50 durch die erste Kopfkammer 40 hindurch nach außen kommen kann. Ein konkretes Ausführungsbeispiel für das Ventil 350 wird im Zusammenhang mit der Figur 8 erläutert.

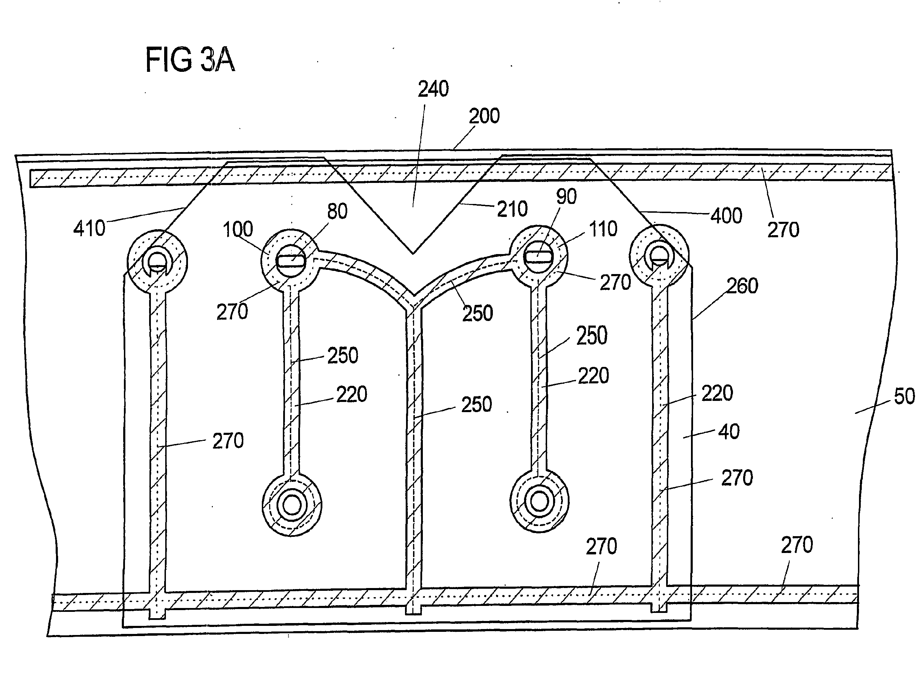

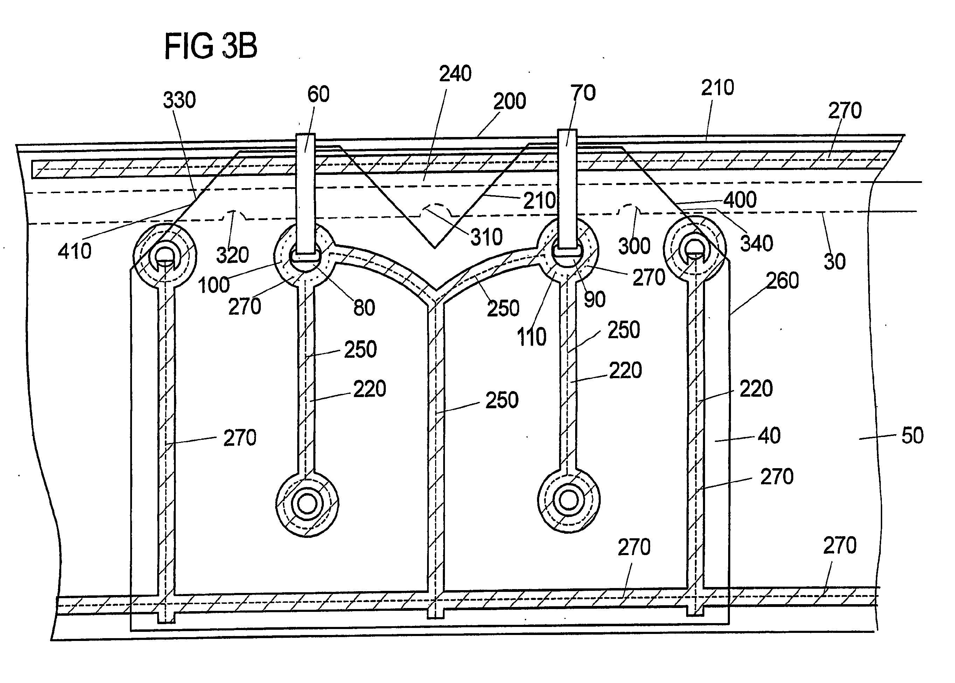

Anhand der Figuren 3A und 3B wird nachfolgend ein drittes Ausführungsbeispiel einer Seiten-Airbageinrichtung beschrieben. Dabei zeigt die Figur 3A eine erste Materiallage 200 sowie eine zweite Materiallage 210, die miteinander verbunden sind, wie dies im Zusammenhang mit den Figuren 1A und 1C des ersten Ausführungsbeispiels bereits erläutert wurde. Im Unterschied zu dem ersten Ausführungsbeispiel ist bei dem dritten Ausführungsbeispiel die äußere Form der dritten Materiallage 260 anders ausgestaltet. Konkret sind die Ecken der im Wesentlichen rechteckförmig ausgestalteten dritten Materiallage 260 abgeschrägt, wie dies in der Figur 3A durch schräge Kanten 400 und 410 angedeutet ist. Ansonsten entspricht der Materialaufbau des dritten Ausführungsbeispiels dem Materialaufbau gemäß dem ersten Ausführungsbeispiel.

Die Figur 3B zeigt die drei Materiallagen 200, 210 und 260, nachdem die Gaslanze 30 zwischen der ersten Materiallage 200 und der zweiten Materiallage 210 eingeführt worden ist und die Abdichtung zwischen dem Kopfairbag 20 und der Gaslanze 30 durch die Klemmbänder 60 und 70 fertiggestellt wurde.

Außerdem ist in der Figur 3B erkennbar, dass im Bereich der schrägen Kanten 400 und 410 keine Nähte zur Abdichtung der dritten Materiallage 260 vorhanden sind, so dass die bereits im Zusammenhang mit der Figur 1F gezeigten Ausströmöffnungen 330 und 340 gebildet werden. Aufgrund des schrägen Verlaufs der Kanten 400 und 410 ist der Öffnungsquerschnitt der Ausströmöffnungen 330 und 340 größer als der Öffnungsquerschnitt der Ausströmöffnungen des ersten Ausführungsbeispiels, so dass dementsprechend auch der Gasfluss durch diese Ausströmöffnungen 330 und 340 größer als bei dem ersten Ausführungsbeispiel ist.

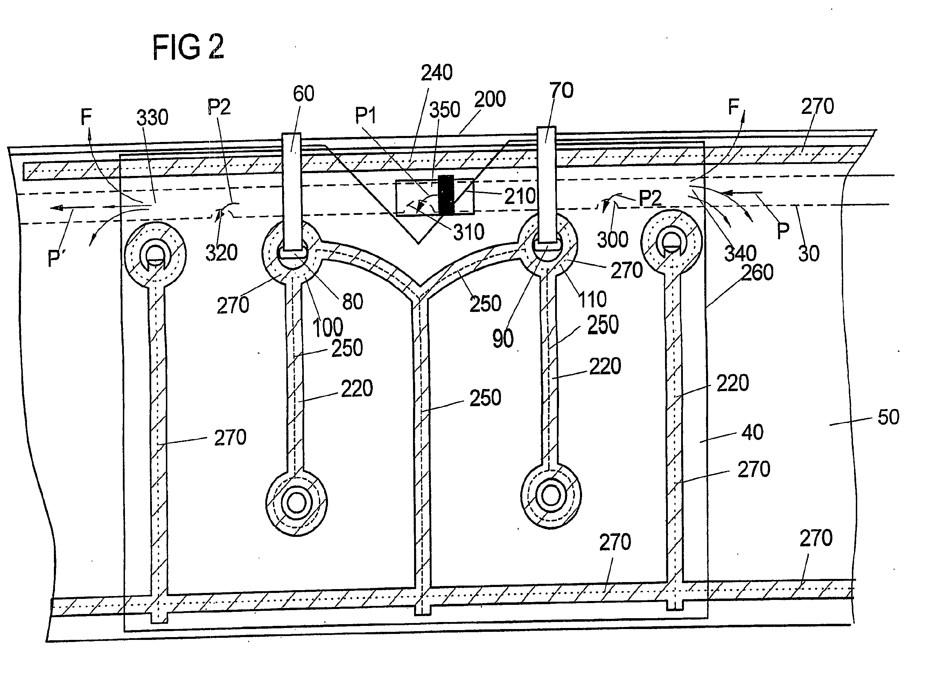

Im Übrigen entspricht das dritte Ausführungsbeispiel dem ersten Ausführungsbeispiel. Selbstverständlich lässt sich auch bei der Gaslanze 30 gemäß dem dritten Ausführungsbeispiel das bereits im Zusammenhang mit der Figur 2 erläuterte Ventil 350 verwenden, um einen Gasstrom von der ersten Kopfkammer 40 zur zweiten Kopfkammer 50 oder umgekehrt zu unterbinden.

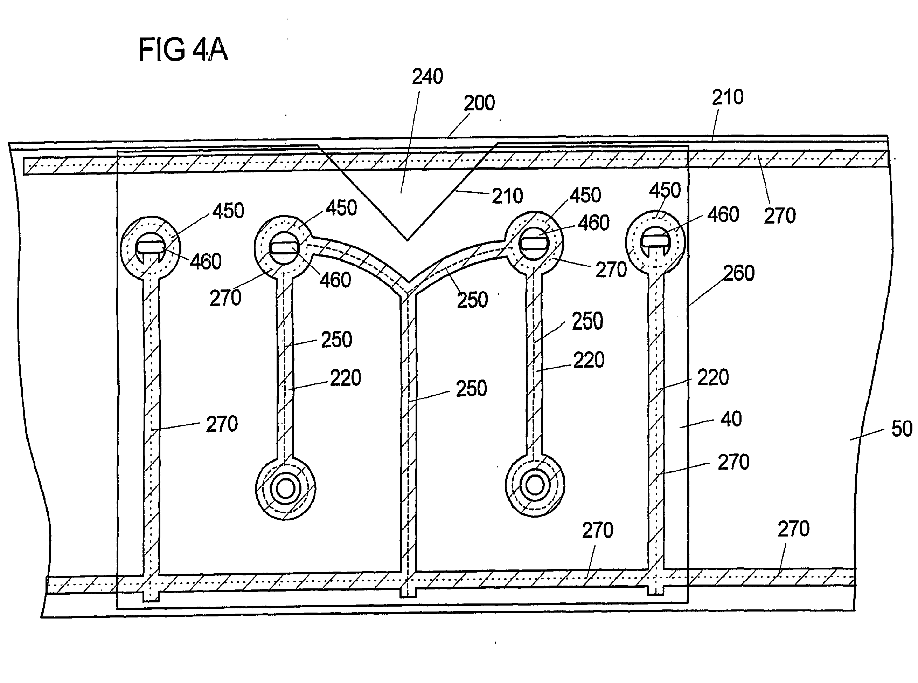

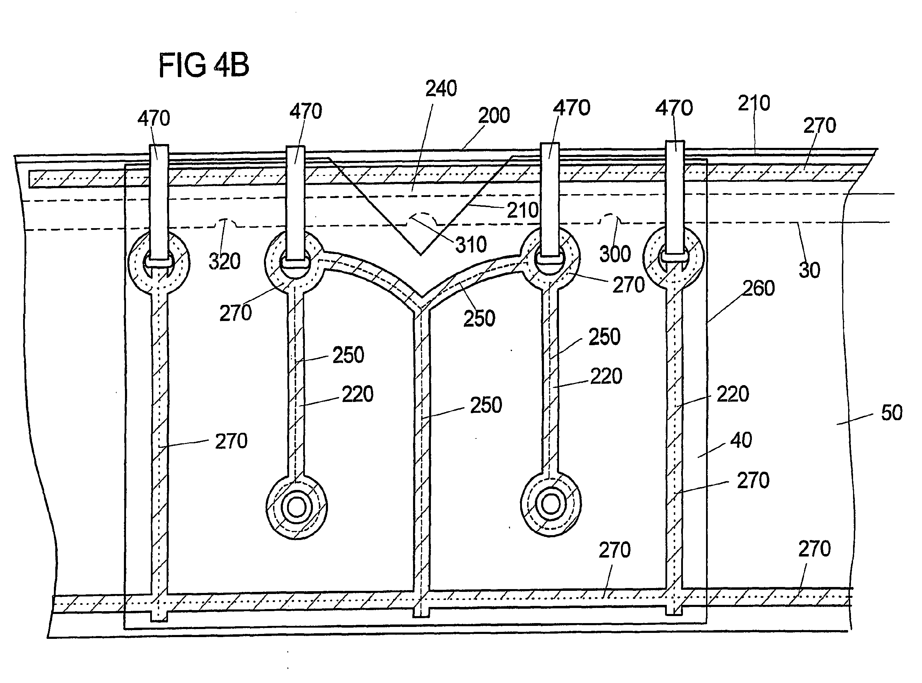

In den Figuren 4A und 4B ist ein viertes Ausführungsbeispiel für eine Seiten-Airbageinrichtung gezeigt. Bei diesem vierten Ausführungsbeispiel sind im Unterschied zu den zuvor erläuterten Ausführungsbeispielen insgesamt vier kreisförmige Nähte 450 vorhanden, die jeweils ein Durchgangsloch 460 abdichten. Dadurch wird es möglich, - insgesamt vier Klemmbänder 470, 470' zum Verbinden der Gaslanze 30 mit dem Kopfairbag 20 einzusetzen. Dies zeigt die Figur 4B im Detail. Durch die beiden äußeren Klemmbänder 470' wird eine Abdichtung der ersten Kopfkammer 40 gegenüber der Gaslanze 30 erreicht; Ausströmöffnungen 330 und 340 wie bei den ersten drei Ausführungsbeispielen sind somit nicht vorhanden. Um eine Gasdurchlässigkeit der ersten Kopfkammer 40 zu erreichen, können an anderen Stellen Öffnungen vorgesehen werden oder es kann eine gasdurchlässige Materiallage 260 eingesetzt werden.

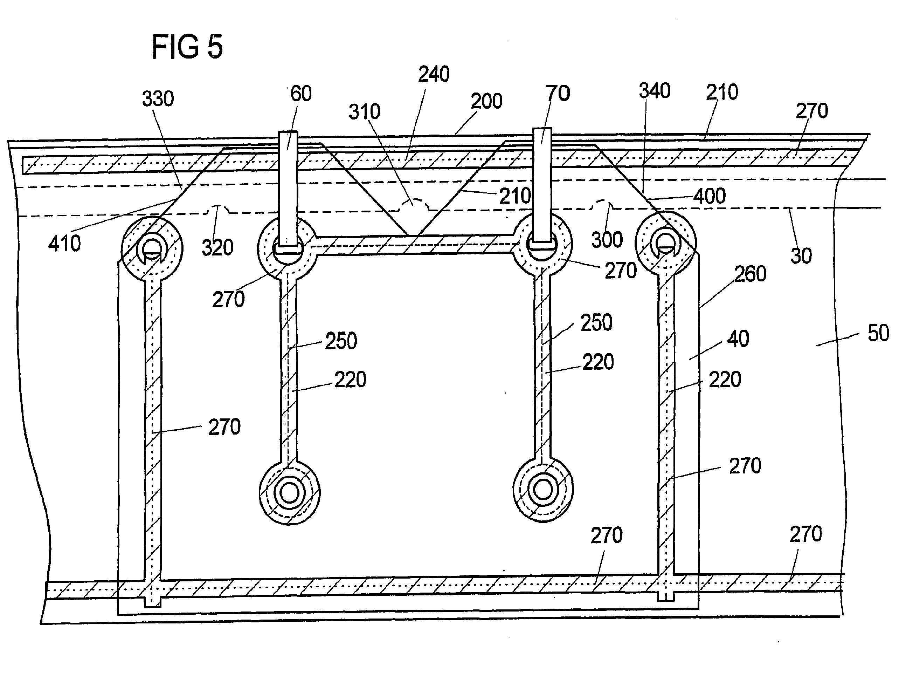

In der Figur 5 ist ein fünftes Ausführungsbeispiel für eine Seiten-Airbageinrichtung gezeigt. Dieses fünfte Ausführungsbeispiel unterscheidet sich von dem dritten Ausführungsbeispiel durch die Ausgestaltung der Nähte 250 zwischen der ersten Materiallage 200 und der zweiten Materiallage 210. Aufgrund der unterschiedlichen Ausgestaltung dieser Nähte 250 kommt es zu einer anderen Formgestaltung der entfalteten bzw. aufgeblasenen zweiten Kopfkammer 50.

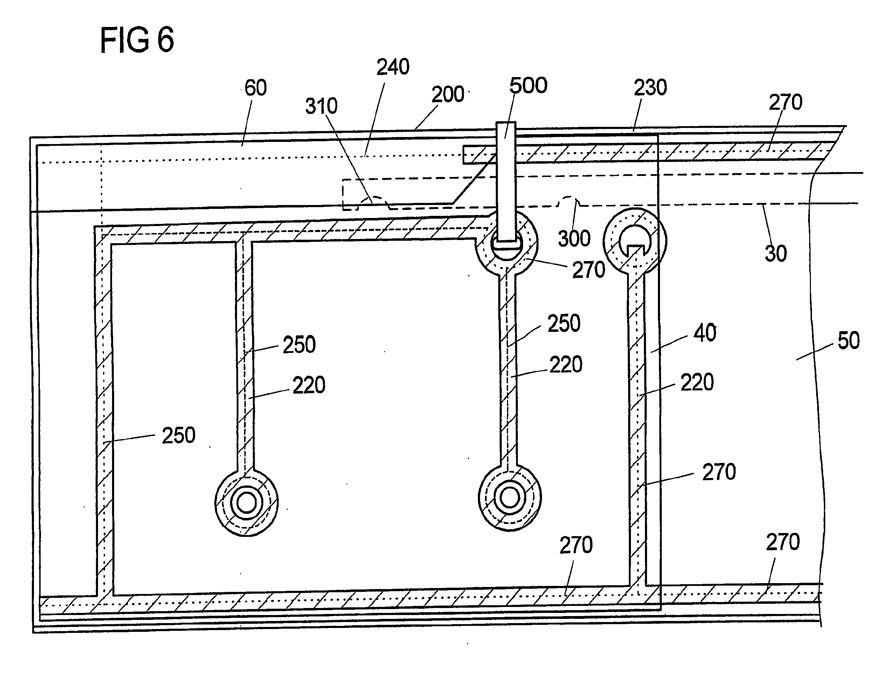

In der Figur 6 ist erkennbar, dass eine erste Kopfkammer 40 für die erste Unfallphase auch im Endbereich der Gaslanze 30 angeordnet sein kann (sechstes Ausführungsbeispiel). Die zum Befüllen dieser ersten Kopfkammer 40 vorgesehene Gasauslassöffnung der Gaslanze 30 ist mit dem Bezugszeichen 310 gekennzeichnet. Um eine Abdichtung zwischen der ersten Kopfkammer 40 und der Gaslanze 30 zu gewährleisten, ist ein Klemmband 500 vorgesehen. Von der Funktionsweise her entspricht das sechste Ausführungsbeispiel gemäß Figur 6 den oben bereits erläuterten Ausführungsbeispielen 1 bis 5.

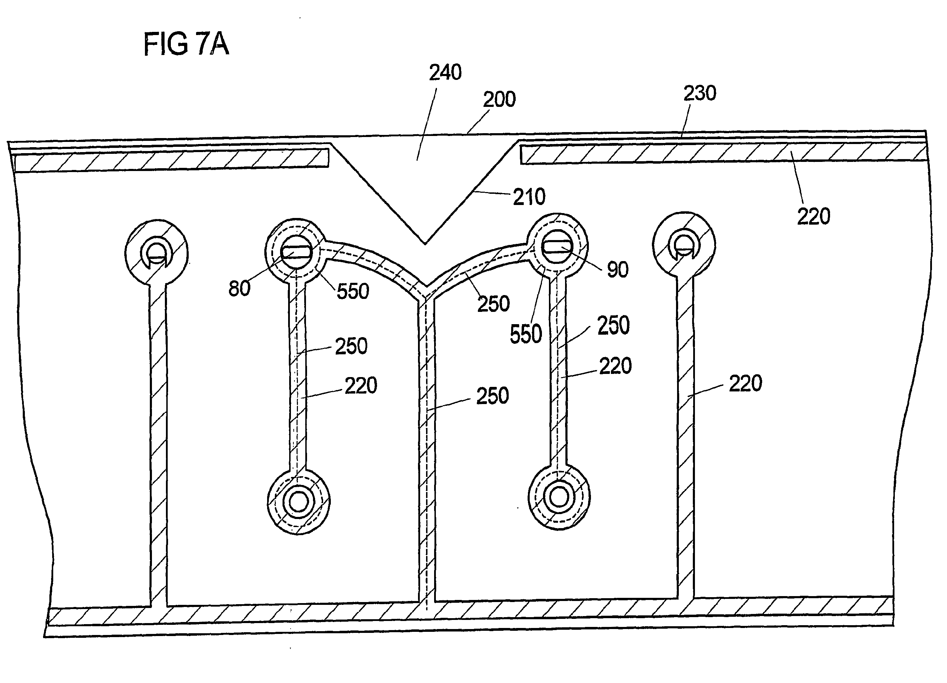

In den Figuren 7A bis 7E ist ein siebentes Ausführungsbeispiel gezeigt. In der Figur 7A ist erkennbar, wie die erste und die zweite Materiallage 200, 210 miteinander vernäht sind. Man erkennt, dass im Unterschied zu dem ersten Ausführungsbeispiel (vgl. Fig. 1 C) zusätzlich zu den Nähten 250 gemäß der Figur 1C weitere kreisförmige Nähte 550 vorhanden sind, mit denen die beiden Materiallagen 200 und 210 verbunden sind.

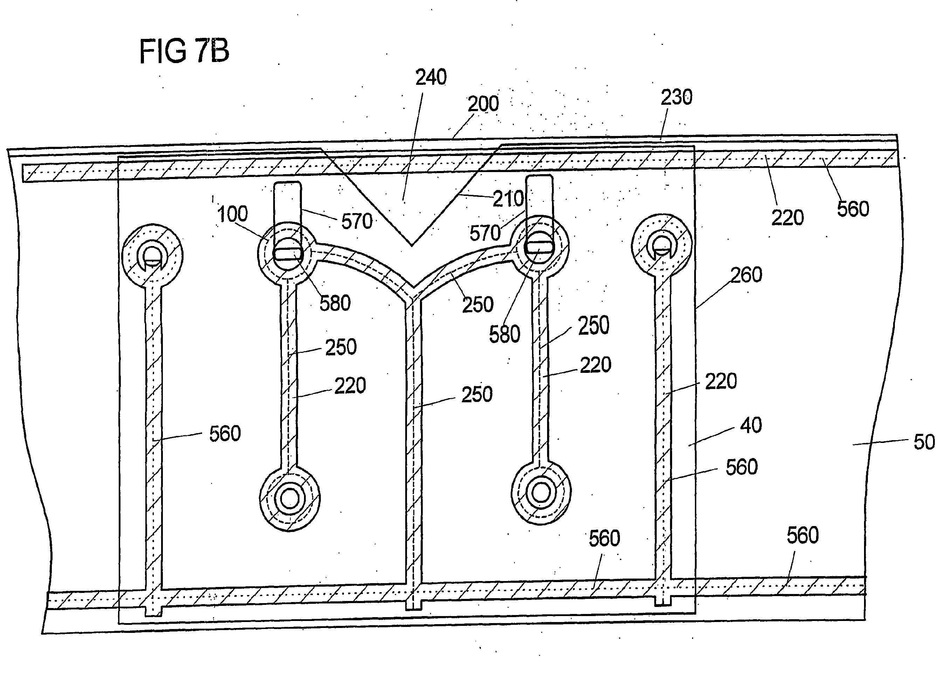

In der Figur 7B sieht man, dass die dritte Materiallage 260 ausschließlich randseitig mit den beiden anderen Materiallagen 200 und 210 vernäht ist, und zwar durch die Nähte 560; im Bereich der kreisförmigen Nähte 550 zwischen der ersten und der zweiten Materiallage wird die dritte Materiallage 260 - im Unterschied zu den Ausführungsbeispielen 1 bis 6 - nicht vernäht.

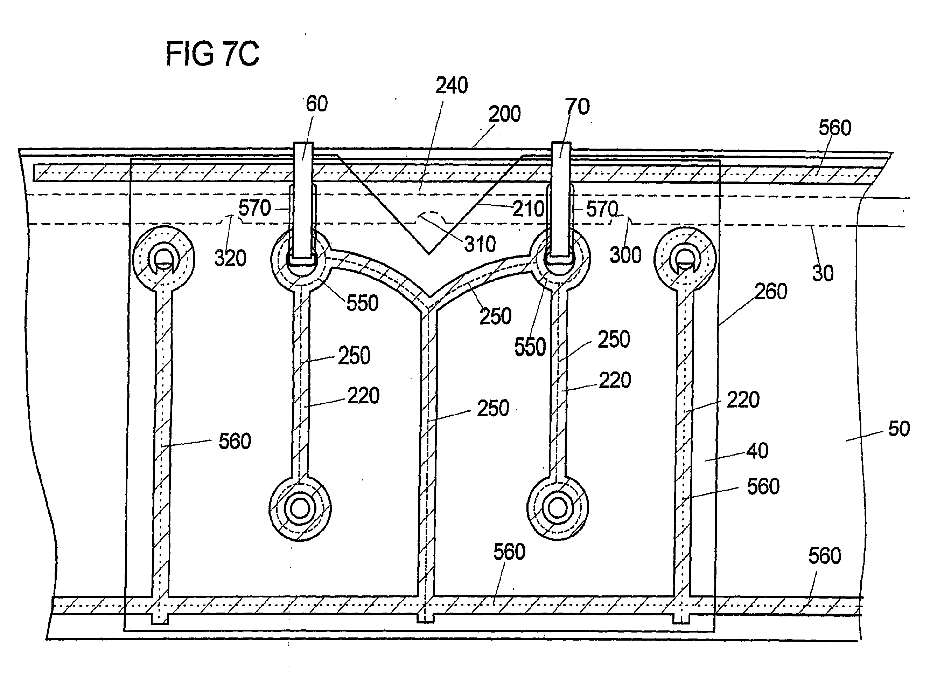

Außerdem zeigt die Figur 7B in der dritten Materiallage 260 zwei relativ große Öffnungslöcher 570, die zur Befestigung des Kopfairbags 20 herangezogen werden. Durch diese beiden Öffnungslöcher 570 sowie durch Öffnungen 580 in den Materiallagen 200 und 210, die durch die kreisförmigen Nähte 550 eingeschlossen und abgedichtet werden, werden die Klemmbänder 60 und 70 gezogen, um eine Verbindung zu der Gaslanze 30 herzustellen (vgl. Fig. 7C).

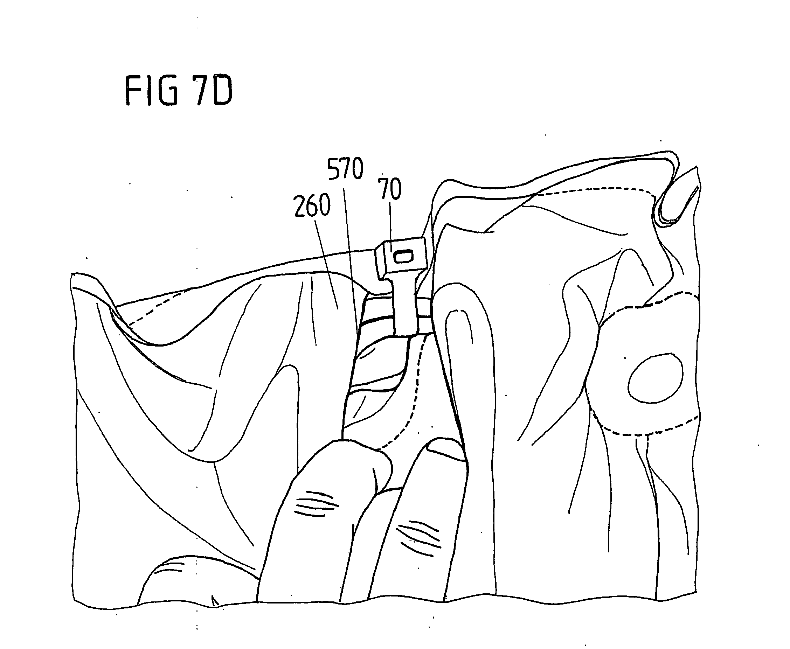

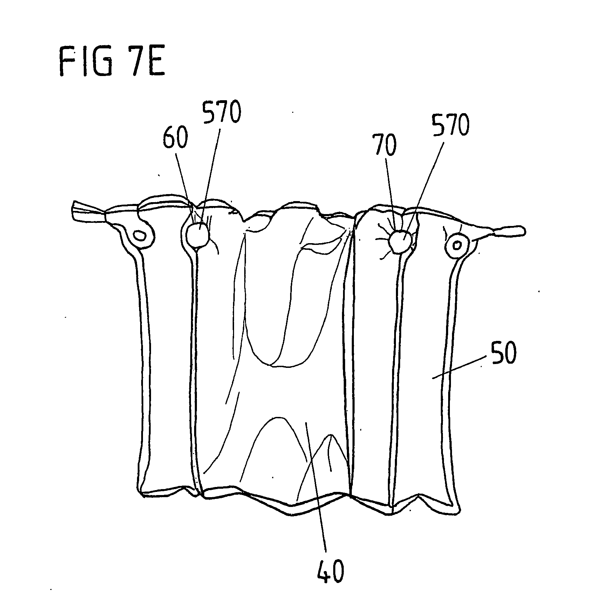

Wie sich in der Figur 7C sowie den Figuren 7D und 7E erkennen lässt, ist die Verbindung zwischen der dritten und der zweiten Materiallage 260,210 im Bereich der Öffnungslöcher 570 relativ "lose", so dass ein Gasaustritt aus der ersten Kopfkammer 40 im Bereich der Öffnungslöcher 570 ohne weiteres möglich ist. Die "Gasdurchlässigkeit" des siebenten Ausführungsbeispiels ist somit deutlich größer als die der Ausführungsbeispiele 1 bis 6.

In der Figur 8 erkennt man ein Ausführungsbeispiel für das Ventil 350 gemäß der Figur 2. Das Ventil 350 weist ein Rohr 600 auf, das beispielsweise unmittelbar durch die Gaslanze 30 oder durch ein separates zusätzliches, mit der Gaslanze 30 verbundenes Rohr gebildet ist und dessen Innenbereich 610 mit dem Gasgenerator 30 in Verbindung steht. Das Rohr 600 ist mit Abströmöffnungen 620 ausgestattet, die von einem Gummischlauch 640 abgedeckt werden. Der Gummischlauch 640 wird von einer Schelle 650 an dem Rohr 600 festgeklemmt, und zwar außerhalb des Bereichs der Abströmöffnungen 620. Der Bereich 660 außerhalb der mit dem Gummischlauch 640 abgedeckten Abströmöffnungen 620 steht mit der ersten Kopfkammer 40 in Verbindung.

Die Funktionsweise des Ventils 350 ist wie folgt: Übersteigt der Druck Pi innerhalb des Rohres 600 einen Grenzdruck, der durch den Außendruck Pa in der ersten Kopfkammer 40 sowie die elastische Gegenkraft des Gummischlauchs 640 gebildet wird, so wird der Gummischlauch 640 aufgeweitet und das Gas kann aus den Abströmöffnungen 620 in den Außenbereich 660 austreten; dies ist in der Figur 8 durch Pfeile A angedeutet. Sinkt der Druck Pi innerhalb des Rohres 600 unterhalb des Grenzdruckes, so verschließt der Gummischlauch 640 die abgedeckten Abströmöffnungen 620 und ein Gasaustritt wird verhindert. Das Ventil 350 ist somit "druckgesteuert". Im Übrigen ist nur eine Gasstromrichtung möglich, nämlich vom Rohrinneren ins Rohräußere, da bei einem größeren Druck Pa außerhalb des Rohres 600 als innerhalb des Rohres die abgedeckten Abströmöffnungen 620 durch den Gummischlauch 640 verschlossen werden.

### Bezugszeichenliste

- 10: Seiten-Airbageinrichtung
- 20: Kopfairbag
- 30: Gaslanze
- 40: Erste Kopfkammer
- 50: Zweite Kopfkammer
- 60: Klemmband
- 70: Klemmband
- 80: Durchgangsloch
- 90: Durchgangsloch
- 100: Kreisförmige Naht
- 110: Kreisförmige Naht
- 200: Erste Materiallage
- 210: Zweite Materiallage
- 220: silikonbeschichtete Bereiche
- 230: Seitenkante
- 240: Materialaussparung
- 250: Nähte
- 260: Dritte Materiallage
- 270: Nähte
- 300,310,320: Gasauslassöffnungen
- 330, 340: Ausströmöffnungen
- 350: Ventil
- 400, 410: Schräge Kanten
- 450: Kreisförmige Nähte
- 460: Durchgangslöcher
- 470: Klemmbänder
- 500: Klemmband
- 550: kreisförmige Nähte
- 560: Nähte
- 570: Öffnungslöcher
- 580: Öffnungen
- 600: Rohr
- 610: Innenbereich
- 620: Abströmöffnungen
- 640: Gummischlauch
- 650: Schelle
- 660: Außenbereich

## Patentansprüche

1. Seiten-Airbageinrichtung (10) für ein Fahrzeug mit einem Kopfairbag (20), der im Falle eines Fahrzeugunfalls einen seitlichen Aufprallschutz für den Kopf eines Fahrzeuginsassen bewirkt, wobei der Kopfairbag (20) zum Schutz des Kopfes zumindest zwei Kopfkammern (40, 50) aufweist, wobei eine der beiden Kopfkammern (40) - nachfolgend erste Kopfkammer genannt - im Unfallfall die unfallbedingte Bewegung des Kopfes abbremst, wobei eine weitere Kopfkammer - nachfolgend zweite Kopfkammer (50) genannt - die erste Kopfkammer (40) abstützt, und wobei die erste Kopfkammer (40) gasdurchlässiger als die zweite Kopfkammer (50) ausgeführt ist,
**dadurch gekennzeichnet, dass**
- die erste Kopfkammer (40) gasdurchlässig und die zweite Kopfkammer (50) für Gas undurchlässig ist und
- die beiden Kopfkammern (40, 50) separat mit Gas gefüllt werden und gasstrommäßig voneinander getrennt sind.

2. Seiten-Airbageinrichtung nach Anspruch 1, **dadurch gekennzeichnet, dass**
- die erste Kopfkammer (40) im Unfallfall dem Kopf zugewandt derart entfaltet wird, dass der Kopf im Unfallfall unmittelbar in die erste Kopfkammer (40) eintaucht, und
- wobei die zweite Kopfkammer (50) dem Kopf abgewandt entfaltet wird.

3. Seiten-Airbageinrichtung nach Anspruch 2, **dadurch gekennzeichnet, dass** die zweite Kopfkammer (50) - in Aufschlagrichtung des Kopfes gesehen - hinter der ersten Kopfkammer derart angeordnet ist, dass sie in einer der ersten Unfallphase nachfolgenden zweiten Unfallphase eine seitliche Abschirmung des Kopfes gewährleistet, insbesondere für den Fall von Fahrzeugüberschlägen.

4. Seiten-Airbageinrichtung nach Anspruch 1, **dadurch gekennzeichnet, dass**
- die erste Kopfkammer im Unfallfall dem Kopf abgewandt entfaltet wird, und
- die zweite Kopfkammer dem Kopf zugewandt derart entfaltet, dass der Kopf im Unfallfall in die zweite Kopfkammer eintaucht.

5. Seiten-Airbageinrichtung nach Anspruch 4, **dadurch gekennzeichnet, dass** die zweite Kopfkammer - in Aufschlagrichtung des Kopfes gesehen - vor der ersten Kopfkammer derart angeordnet ist, dass sie in einer der ersten Unfallphase nachfolgenden zweiten Unfallphase eine seitliche Abschirmung des Kopfes gewährleistet, insbesondere für den Fall von Fahrzeugüberschlägen.

6. Seiten-Airbageinrichtung nach einem der voranstehenden Ansprüche, **dadurch gekennzeichnet, dass** die erste Kopfkammer (40) Ausströmöffnungen (330, 340) aufweist, die einen Gasstrom nach außen ermöglichen.

7. Seiten-Airbageinrichtung nach einem der voranstehenden Ansprüche 1 bis 6, **dadurch gekennzeichnet, dass** die beiden Kopfkammern (40, 50) an ein und dieselbe Gaslanze (30) angeschlossen sind, und zwar derart, dass Gasauslassöffnungen (300, 310, 320) der Gaslanze (30) entweder der ersten oder der zweiten Kopfkammer zugeordnet sind.

8. Seiten-Airbageinrichtung nach Anspruch 7, **dadurch gekennzeichnet, dass** die Gaslanze (30) aus einem Gewebematerial, insbesondere aus einem Textilmaterial besteht.

9. Seiten-Airbageinrichtung nach einem der voranstehenden Ansprüche, **dadurch gekennzeichnet, dass** die Gaslanze (30) mit zumindest einem Ventil (350) ausgestattet ist, mit dem sich der Gasstrom (P) zwischen der Gaslanze (30) und der ersten Kopfkammer (40) und umgekehrt unterbrechen lässt.

10. Seiten-Airbageinrichtung nach Anspruch 9, **dadurch gekennzeichnet, dass** das Ventil (350) geschlossen wird, wenn in der ersten Kopfkammer (40) ein vorgegebener Gasdruck erreicht ist oder wenn der Gasdruck in der Gaslanze (30) einen vorgegebenen Mindestdruck unterschreitet.

11. Seiten-Airbageinrichtung nach Anspruch 9 oder 10, **dadurch gekennzeichnet, dass** das Ventil (350) durch ein Rohr (600) mit Abströmöffnungen (620) gebildet ist, die von einem elastischen Abdichtelement abgedeckt werden.

12. Seiten-Airbageinrichtung nach Anspruch 11, **dadurch gekennzeichnet, dass** das elastische Abdichtelement (640) durch ein Schlauch, insbesondere ein Gummischlauch, oder eine Manschette, insbesondere eine Gummimanschette, gebildet ist.

13. Seiten-Airbageinrichtung nach Anspruch 9 oder 10, **dadurch gekennzeichnet, dass** das Ventil ein elektrisch oder pneumatisch gesteuertes Ventil (350) ist.

14. Seiten-Airbageinrichtung nach Anspruch 13, **dadurch gekennzeichnet, dass** ein Drucksensor in der Gaslanze (30) und/oder in oder an der ersten Kopfkammer (40) angebracht ist, mit der der Gasdruck in der Gaslanze (30) oder in der ersten Kopfkammer (40) gemessen wird, und dass mit dem Drucksensor eine Steuereinrichtung in Verbindung steht, die in Abhängigkeit von den Druckwerten das Ventil ansteuert.

15. Seiten-Airbageinrichtung nach Anspruch 13 oder 14, **dadurch gekennzeichnet, dass** die Ansteuerung des Ventils zeitgesteuert ist.

16. Seiten-Airbageinrichtung nach einem der voranstehenden Ansprüche, **dadurch gekennzeichnet, dass** der Kopfairbag (20) aus drei Materiallagen (200, 210, 260) gebildet ist.

17. Seiten-Airbageinrichtung nach Anspruch 16, **dadurch gekennzeichnet,**
- **dass** eine erste Materiallage (200) und eine zweite Materiallage (210) miteinander verbunden sind und die zweite Kopfkammer (50) bilden und
- **dass** eine dritte Materiallage (260) mit der zweiten Materiallage (210) verbunden ist und mit dieser die erste Kopfkammer (40) bildet.

18. Seiten-Airbageinrichtung nach Anspruch 16 oder 17, **dadurch gekennzeichnet, dass** die dritte Materiallage (260) gasdurchlässig ist.

19. Seiten-Airbageinrichtung nach einem der voranstehenden Ansprüche 16 bis 18, **dadurch gekennzeichnet, dass** die dritte Materiallage (260) derart mit der zweiten Materiallage (210) verbunden ist, dass zumindest eine Ausströmöffnung (330, 340) gebildet wird, durch die das Gas aus der ersten Kopfkammer (40) nach draußen austreten kann.

20. Seiten-Airbageinrichtung nach einem der voranstehenden Ansprüche 16 bis 19, **dadurch gekennzeichnet, dass** die zweite Materiallage (210) entlang einer ihrer mit der ersten und mit der dritten Materiallage (200, 260) verbundenen Seitenkanten (230) zumindest eine Materialaussparung (240) aufweist, die einen Gasstrom von einer zwischen der ersten und der zweiten Materiallage liegenden Gaslanze (30) zu der ersten Kopfkammer (40) ermöglicht.

21. Seiten-Airbageinrichtung nach Anspruch 20, **dadurch gekennzeichnet, dass** die Materialaussparung (240) V-förmig ausgeformt ist.

22. Seiten-Airbageinrichtung nach einem der voranstehenden Ansprüche 16 bis 21, **dadurch gekennzeichnet, dass** die dritte Materiallage (260) im Wesentlichen rechteckförmig ist.

23. Seiten-Airbageinrichtung nach Anspruch 22, **dadurch gekennzeichnet, dass** im Bereich zweier Ecken der rechteckförmigen dritten Materiallage (260) Ausströmöffnungen (330, 340) gebildet sind.

24. Seiten-Airbageinrichtung nach Anspruch 23, **dadurch gekennzeichnet, dass** die zwei Ecken abgeschrägt sind.

25. Seiten-Airbageinrichtung nach einem der voranstehenden Ansprüche, **dadurch gekennzeichnet, dass** die Gaslanze (30) zwischen der ersten und der zweiten Materiallage (200, 210) angeordnet ist und eine gasdichte Verbindung zwischen der zweiten Kopfkammer (50) und der Gaslanze (30) durch Klemmverbindungen (60, 70) erfolgt.

26. Seiten-Airbageinrichtung nach einem der voranstehenden Ansprüche, **dadurch gekennzeichnet, dass** die äußere Form und/oder die Schutzwirkung der entfalteten ersten Kopfkammer durch zumindest ein Fangband beeinflusst wird.

27. Seiten-Airbageinrichtung nach einem der voranstehenden Ansprüche, **dadurch gekennzeichnet, dass** das zumindest eine Fangband außen oder innen an der ersten Kopfkammer angebracht ist.

## Claims

1. Lateral airbag device (10) for a vehicle, with a head airbag (20) which, in the event of an accident of the vehicle, brings about lateral impact protection for a vehicle occupant's head, the head airbag (20) for protecting the head having at least two head chambers (40, 50), in the event of an accident, one of the two head chambers (40) - called first head chamber below - braking the accident-induced movement of the head, a further head chamber - called second head chamber (50) below - supporting the first head chamber (40), and the first head chamber (40) being designed to be more gas-permeable than the second head chamber (50),
**characterized in that**
- the first head chamber (40) is gas-permeable and the second head chamber (50) is impermeable to gas, and
- the two head chambers (40, 50) are filled separately with gas and are separated from one another in terms of gas flow.

2. Lateral airbag device according to Claim 1,
**characterized in that**
- in the event of an accident, the first head chamber (40) is deployed, facing the head, in such a manner that, in the event of an accident, the head plunges directly into the first head chamber (40), and
- the second head chamber (50) being deployed facing away from the head.

3. Lateral airbag device according to Claim 2, **characterized in that** the second head chamber (50) is arranged downstream of the first head chamber - as seen in the striking direction of the head - in such a manner that, in a second accident phase following the first accident phase, it ensures lateral shielding of the head, in particular in the event of roll-over phases of the vehicle.

4. Lateral airbag device according to Claim 1,
**characterized in that**
- in the event of an accident, the first head chamber is deployed facing away from the head, and
- the second head chamber is deployed, facing the head, in such a manner that, in the event of an accident, the head plunges into the second head chamber.

5. Lateral airbag device according to Claim 4, **characterized in that** the second head chamber is arranged upstream of the first head chamber - as seen in the striking direction of the head - in such a manner that, in a second accident phase following the first accident phase, it ensures lateral shielding of the head, in particular in the event of roll-over phases of the vehicle.

6. Lateral airbag device according to one of the preceding claims, **characterized in that** the first head chamber (40) has discharge openings (330, 340) which permit a gas flow to the outside.

7. Lateral airbag device according to one of the preceding Claims 1 to 6, **characterized in that** the two head chambers (40, 50) are connected to one and the same gas lance (30), to be precise, in such a manner that gas outlet openings (300, 310, 320) of the gas lance (30) are assigned either to the first or the second head chamber.

8. Lateral airbag device according to Claim 7, **characterized in that** the gas lance (30) is composed of a fabric material, in particular of a textile material.

9. Lateral airbag device according to one of the preceding claims, **characterized in that** the gas lance (30) is equipped with at least one valve (350) with which the gas flow (P) between the gas lance (30) and the first head chamber (40) and vice versa can be interrupted.

10. Lateral airbag device according to Claim 9, **characterized in that** the valve (350) is closed when a predetermined gas pressure is reached in the first head chamber (40) or when the gas pressure in the gas lance (30) falls below a predetermined minimum pressure.

11. Lateral airbag device according to Claim 9 or 10, **characterized in that** the valve (350) is formed by a pipe (600) with outflow openings (620) which are covered by an elastic sealing element.

12. Lateral airbag device according to Claim 11, **characterized in that** the elastic sealing element (640) is formed by a tube, in particular a rubber tube, or a sleeve, in particular a rubber sleeve.

13. Lateral airbag device according to Claim 9 or 10, **characterized in that** the valve is an electrically or pneumatically controlled valve (350).

14. Lateral airbag device according to Claim 13, **characterized in that** a pressure sensor is fitted in the gas lance (30) and/or in or on the first head chamber (40) and is used to measure the gas pressure in the gas lance (30) or in the first head chamber (40), and **in that** a control device which activates the valve as a function of the pressure values is connected to the pressure sensor.

15. Lateral airbag device according to Claim 13 or 14, **characterized in that** the activation of the valve is time-controlled.

16. Lateral airbag device according to one of the preceding claims, **characterized in that** the head airbag (20) is formed from three material layers (200, 210, 260).

17. Lateral airbag device according to Claim 16,
**characterized**
- **in that** a first material layer (200) and a second material layer (210) are connected to each other and form the second head chamber (50), and
- **in that** a third material layer (260) is connected to the second material layer (210) and, with the latter, forms the first head chamber (40).

18. Lateral airbag device according to Claim 16 or 17, **characterized in that** the third material layer (260) is gas-permeable.

19. Lateral airbag device according to one of the preceding Claims 16 to 18, **characterized in that** the third material layer (260) is connected to the second material layer (210) in such a manner that at least one discharge opening (330, 340) is formed, through which the gas from the first head chamber (40) can exit to the outside.

20. Lateral airbag device according to one of the preceding Claims 16 to 19, **characterized in that** the second material layer (210) has, along one of its side edges (230) connected to the first and to the third material layer (200, 260), at least one material cutout (240) which permits a gas flow to the first head chamber (40) from a gas lance (30) located between the first and the second material layer.

21. Lateral airbag device according to Claim 20, **characterized in that** the material cutout (240) is shaped in the form of a V.

22. Lateral airbag device according to one of the preceding Claims 16 to 21, **characterized in that** the third material layer (260) is essentially rectangular.

23. Lateral airbag device according to Claim 22, **characterized in that** discharge openings (330, 340) are formed in the region of two corners of the rectangular third material layer (260).

24. Lateral airbag device according to Claim 23, **characterized in that** the two corners are bevelled.

25. Lateral airbag device according to one of the preceding claims, **characterized in that** the gas lance (30) is arranged between the first and the second material layer (200, 210), and a gastight connection between the second head chamber (50) and the gas lance (30) takes place by means of clamping connections (60, 70).

26. Lateral airbag device according to one of the preceding claims, **characterized in that** the outer shape and/or the protective effect of the deployed first head chamber is influenced by at least one retaining strap.

27. Lateral airbag device according to one of the preceding claims, **characterized in that** the at least one retaining strap is fitted on the outside or inside of the first head chamber.

## Revendications

1. Système de coussin gonflable latéral (10) pour un véhicule, comprenant un coussin de tête (20) qui, dans le cas d'un accident du véhicule, assure une protection d'impact latérale pour la tête d'un passager du véhicule, ledit coussin de tête (20) présentant, pour la protection de la tête, au moins deux chambres de tête (40, 50), l'une des deux chambres de tête (40), dénommée dans ce qui suit première chambre de tête, freinant en cas d'accident le mouvement de la tête dû à l'accident, et une autre chambre de tête, dénommée dans ce qui suit seconde chambre de tête (50), soutenant la première chambre de tête (40), la première chambre de tête (40) etant réalisée plus perméable aux gaz que la seconde chambre de tête (50),
**caractérisé en ce que**
- la première chambre de tête (40) est perméable aux gaz et la seconde chambre de tête (50) est imperméable aux gaz, et
- les deux chambres de tête (40, 50) sont remplies séparément avec du gaz et sont séparées l'une de l'autre pour ce qui concerne l'écoulement des gaz.

2. Système de coussin gonflable latéral selon la revendication 1,
**caractérisé en ce que**
- la première chambre de tête (40) est déployée en cas d'accident en se tournant vers la tête, de telle façon que, en cas d'accident, la tête plonge directement dans la première chambre de tête (40), et
- la seconde chambre de tête (50) est déployée en se détournant de la tête.

3. Système de coussin gonflable latéral selon la revendication 2, **caractérisé en ce que** la seconde chambre de tête (50) est agencée en arrière de la première chambre de tête, vue dans la direction d'impact de la tête, de telle façon qu'elle assure, dans une seconde phase de l'accident qui fait suite à la première phase d'accident, une protection latérale de la tête, en particulier dans le cas d'un retournement du véhicule.

4. Système de coussin gonflable latéral selon la revendication 1,
**caractérisé en ce que**
- la première chambre de tête est déployée en cas d'accident en se détournant de la tête, et
- la seconde chambre de tête est déployée en se dirigeant vers la tête, de telle façon que, en cas d'accident, la tête plonge dans la seconde chambre de tête.

5. Système de coussin gonflable latéral selon la revendication 4, **caractérisé en ce que** la seconde chambre de tête est agencée en avant de la première chambre de tête, vue dans la direction d'impact de la tête, de telle façon qu'elle assure, dans une seconde phase de l'accident qui fait suite à la première phase d'accident, une protection latérale de la tête, en particulier dans le cas d'un retournement du véhicule.

6. Système de coussin gonflable latéral selon l'une des revendications précédentes, **caractérisé en ce que** la première chambre de tête (40) présente des ouvertures d'échappement (330, 340) qui permettent un écoulement du gaz vers l'extérieur.

7. Système de coussin gonflable latéral selon l'une des revendications précédentes 1 à 6, **caractérisé en ce que** les deux chambres de tête (40, 50) sont raccordés à une seule et même tuyère à gaz (30), et cela de telle manière que des ouvertures de sortie de gaz (300, 310, 320) de la tuyère à gaz (30) sont associées soit à la première soit à la seconde chambre de tête.

8. Système de coussin gonflable latéral selon la revendication 7, **caractérisé en ce que** la tuyère à gaz (30) est réalisée en un matériau tissé, en particulier en un matériau textile.

9. Système de coussin gonflable latéral selon l'une des revendications précédentes, **caractérisé en ce que** la tuyère à gaz (30) est équipée d'au moins une soupape (350) au moyen de laquelle il est possible d'interrompre l'écoulement de gaz (P) entre la tuyère à gaz (30) et la première chambre de tête (40) et inversement.

10. Système de coussin gonflable latéral selon la revendication 9, **caractérisé en ce que** la soupape (350) est fermée quand une pression de gaz prédéterminée est atteinte dans la première chambre de tête (40) ou quand la pression de gaz dans la tuyère à gaz (30) passe au-dessous d'une pression minimum prédéterminée.

11. Système de coussin gonflable latéral selon la revendication 9 ou 10, **caractérisé en ce que** la soupape (350) est formée par un tube (600) avec des ouvertures d'échappement (620) qui sont recouvertes par un élément d'étanchement élastique.

12. Système de coussin gonflable latéral selon la revendication 11, **caractérisé en ce que** l'élément d'étanchement élastique (640) est formé par un tuyau, en particulier un tuyau en caoutchouc, ou par une manchette, en particulier une manchette en caoutchouc.

13. Système de coussin gonflable latéral selon la revendication 9 ou 10, **caractérisé en ce que** la soupape est une soupape à commande électrique ou pneumatique (350).

14. Système de coussin gonflable latéral selon la revendication 13, **caractérisé en ce qu'**un capteur de pression est monté dans la tuyère à gaz (30) et/ou dans ou sur la première chambre de tête (40), avec laquelle la pression du gaz est mesurée dans la tuyère à gaz (30) ou dans la première chambre de tête (40), et **en ce qu'**un dispositif de commande est connecté au capteur de pression, qui pilote la soupape en fonction des valeurs de pression.

15. Système de coussin gonflable latéral selon la revendication 13 ou 14, **caractérisé en ce que** le pilotage de la soupape est commandé en fonction du temps.

16. Système de coussin gonflable latéral selon l'une des revendications précédentes, **caractérisé en ce que** le coussin de tête (20) est formé de trois couches de matériaux (200, 210, 260).

17. Système de coussin gonflable latéral selon la revendication 16,
**caractérisé en ce que**
- une première couche de matériau (200) et une seconde couche de matériau (210) sont reliées l'une à l'autre et forment la seconde chambre de tête (50), et
- une troisième couche de matériau (260) est reliée à la seconde couche de matériau (210) et forme avec celle-ci la première chambre de tête (40).

18. Système de coussin gonflable latéral selon la revendication 16 ou 17, **caractérisé en ce que** la troisième couche de matériau (260) est perméable aux gaz.

19. Système de coussin gonflable latéral selon le l'une des revendications précédentes 16 à 18, **caractérisé en ce que** la troisième couche de matériau (260) est reliée à la seconde couche de matériau (210) de telle manière qu'il se forme au moins une ouverture d'échappement (330, 340) à travers laquelle le gaz peut sortir hors de la première chambre de tête (40) vers l'extérieur.

20. Système de coussin gonflable latéral selon l'une des revendications précédentes 16 à 19, **caractérisé en ce que** la seconde couche de matériau (210) présente, le long de l'une de ses arêtes latérales (230) reliées à la première et à la troisième couche de matériau (200, 260), au moins un évidement dans le matériau (240), qui permet un écoulement du gaz depuis une tuyère à gaz (30) située entre la première et la seconde couche de matériau vers la première chambre de tête (40).

21. Système de coussin gonflable latéral selon la revendication 20, **caractérisé en ce que** l'évidement de matériau (240) est conformé en forme de V.

22. Système de coussin gonflable latéral selon l'une des revendications précédentes 16 à 21, **caractérisé en ce que** la troisième couche de matériau (260) est sensiblement de forme rectangulaire.

23. Système de coussin gonflable latéral selon la revendication 22, **caractérisé en ce que** des ouvertures d'échappement (330, 340) sont formées dans la zone de deux coins de la troisième couche de matériau rectangulaire (260).

24. Système de coussin gonflable latéral selon la revendication 23, **caractérisé en ce que** les deux coins sont biseautés.

25. Système de coussin gonflable latéral selon l'une des revendications précédentes, **caractérisé en ce que** la tuyère à gaz (30) est agencée entre la première et la seconde couche de matériau (200, 210), et **en ce qu'**une jonction étanche aux gaz est effectuée entre la seconde chambre de tête (50) et la tuyère à gaz (30) par des jonctions par pincement (60, 70).

26. Système de coussin gonflable latéral selon l'une des revendications précédentes, **caractérisé en ce que** la forme extérieure et/ou l'effet protecteur de la première chambre de tête déployée est influencé(e) par au moins un ruban de retenue.

27. Système de coussin gonflable latéral selon l'une des revendications précédentes, **caractérisé en ce que** ledit au moins un ruban de retenue est appliqué à l'extérieur ou à l'intérieur sur la première chambre de tête.
